# EUROPEAN PATENT SPECIFICATION

(11) **EP 1 973 849 B1**
(45) Date of publication and mention of the grant of the patent: **03.11.2010**
(21) Application number: 06824362.5
(22) Date of filing: 01.12.2006
(51) Int. Cl.: C01G 25/02, C01G 53/04

(54) **A METHOD OF SOL-GEL PROCESSING**
VERFAHREN ZUR SOL-GEL-VERARBEITUNG
PROCEDE DE TRAITEMENT SOL-GEL

(30) Priority: 02.12.2005 NO 20055723
(43) Date of publication of application: 01.10.2008
(73) Proprietor: Prototech AS, 5892 Bergen (NO)
(72) Inventor: SUCIU, Crina, Silvia, N-5227 Nesttun (NO)
(74) Representative: Hindenes, Jan-Ove
(86) International application number: PCT/NO2006/000451
(87) International publication number: WO 2007/064228

(56) References cited:
- WO-A-03/031323
- US-A- 3 826 755
- US-B1- 6 168 830

## Description

The present invention relates to a method of sol-gel processing for preparing stabilized or doped gels and nanoparticles, and also gels produced by said methods.

### BACKGROUND OF THE INVENTION

The interest for nanostructured materials, which are synthesized from particles smaller than 100 nanometers, has been growing in the last decades. The interest has been stimulated by the large variety of applications in industries such as aerospace, steel, cosmetics, health, automotive, bioengineering, optoelectronics, computers, and electronics. Research to develop applications have resulted in technologies that make it possible to obtain multilayered films, porous pillars, thin films, nanocrystalline materials, nanopowders and clusters for e.g. paints, antiseptics, nanocomposites, drugs, biomedical implants and military components.

It is very well known that materials with nanoscale grain size show different properties from the same material in bulk form. These unique properties are related to the large number of surface or interface atoms. Nanostructured materials have good refractory properties, good chemical resistance, good mechanical resistance and hardness both at normal and high temperatures; they are especially amenable to sintering and reactions with different oxides. It has also been shown that the large number of surface atoms present in these materials influences the optical, electrical and magnetic properties.

It is now well recognized that the mechanical, electrical, chemical as well as catalytic properties of zirconia can be improved by using nanopowders instead of conventional micron-sized zirconia. When synthesizing of conventional Zr based materials the medium size of the particles is normally in the region of 10 microns, which is generally equivalent to 10¹⁵ atoms. Particles with diameters ranging between 0.1 and 1 micrometer are considered fine particles and are usually made up of 10⁹-10¹⁰ atoms. Particles on a nanoscale, with dimensions ranging from 1 to 100 nanometers (nm) in at least one direction are of particular interest. Particles consisting of 200-300 atoms are designated clusters and their surface atoms can represent up to 80-90% of the total number of the atoms in the particle.

A method for obtaining nanoparticles that does not need expensive equipment is the sol-gel route. The sol-gel method is based on molecular synthesis of nanoparticles wherein the particles are built up by molecule-by-molecule addition. During the process of nanopowder formation close control over the nucleation and growth of the particles is required because the particles easily adhere and form agglomerates.

Inventor's co-pending application describes novel processes for the preparation of gels and nanoparticles using mono and disaccharides as precursors in the sol-gel method.

The present invention relates to the preparation of stabilized gels and nanoparticles using pectin and mono or disaccharides as precursors in the sol-gel method.

Yttrium stabilized zirconia, also called YSZ, is currently the most important ceramic oxygen ion conducting material. It is used in the anode and the electrolyte of solid oxide fuel cells (SOFC) in oxygen gas sensors, and in oxygen pumps.

Doping zirconia, ZrO₂ , with yttria, Y₂O₃ has two important effects. One is to stabilize the cubic crystal structure of the zirconia down to room temperature, avoiding the phase transitions that pure zirconia undergo during heating or cooling, with the attendant volume changes and possible mechanical stresses or failures. The other effect of doping with yttrium is that oxygen vacancies are generated in the material to maintain electrical neutrality as tetravalent zirconium ions are replaced by trivalent yttrium ions; two ions of Y³⁺ correspond to an anionic vacancy V_{A} of O²⁻. These vacancies are responsible for the oxygen ion conductivity.

In solid oxide fuel cells internal resistance in the cell limits the current density through it. This resistance is due to slow reaction kinetics at the electrodes ("activation polarization"), ohmic resistance to the flow of ions through the electrolyte ("ohmic polarization"), and slow diffusion of the reactant/product gases to/from the catalyst surface in the electrodes ("concentration polarization") [1,2]

A way of decreasing the ohmic polarization due to limited ionic conductivity of the electrolyte is to make the electrolyte thinner. If the electrolyte is between 5 and 30 micrometers the ohmic losses become small compared to the electrode losses [3]. A number of recent studies focus on the electrolyte and its manufacture [4-9]

Using YSZ nanoparticles as precursor material for the production of the SOFC electrolyte and anode may be advantageous in several respects.

Producing the electrolyte from nanoparticles allows it to be made thinner. Moreover, it can improve the quality of the electrolyte film, making the gas tightness better, and the microstress distribution more homogeneous. It is also itemed that a finer grain structure leads to higher ionic conductivity in grain boundaries [10], although some molecular dynamics studies indicate that some grain boundaries may act as resistances [11].

Another advantage of using nanoparticles as precursor powder for electrolytes is that the temperature necessary for sintering is reduced, reducing manufacturing costs.

A few articles [12,13] describe the production of YSZ nanoparticles for use in SOFC components.

### SUMMARY OF THE INVENTION

The present invention is directed to methods for sol-gel processing using inorganic metal salts and doping agents.

The present invention is also related to methods for producing nanosize particles from inorganic metal salts and doping agents.

The present invention is also directed to gels produced according to methods described herein.

The methods generally involve mixing together a solution containing an inorganic metal salt, a doping agent and water with pectin and a mono or disaccharide. A macromolecular dispersant molecule such as pectin may optionally be added. The resulting homogenous solution is dried at elevated temperature until it becomes completely gelatinized. Further thermal treatment of the dried gel will transform the material to nanoparticles.

Several parameters of the method can be manipulated, making the method highly tuneable, and enabling production of stabilized/doped sols, gels and particles with various desired characteristics. Variables that can be controlled and which control the product characteristics include the choice of metal salts, the metal salt concentration, the choice of doping agent, the concentration of doping agent, ratio of mono or disaccharide solution to water, incubation temperature and time, and concentration of macromolecular dispersant.

### FIGURE LEGENDS

Figure 1 is a schematic illustration of one embodiment of the invention, showing a process for the preparation of yttrium stabilized zirconium gels and particles as described in example 1.
Figure 2 shows the result of thermal analyses of the yttrium stabilized prepared as described in example 1.
Figure 3 is an electron microscopy yttrium stabilized zirconium gels and particles at 50 000 and 100 000 times magnification at 900 °C.
Figure 4 shoes X-ray diffraction of yttrium stabilized zirconium gels and particles at 1000 °C.

### DETAILED DESCRIPTION OF THE INVENTION

The present invention relates to methods for production of stabilized gels and nanoparticles from inorganic metal salts. The methods offer sol-gel processing to produce a wide variety of materials of high quality.

The methods utilize homogenous nucleation and growth phenomena in inorganic solutions of mixed solvents, such as a mixed solvent of water and mono or disaccharides The methods are applicable for production of sols, gels and nanoparticles from many metals such as aluminum, hafnium, silicon, zirconium, cerium, titanium, lanthanum, germanium, and tantalum, among others, by means of inorganic salts, e.g. nitrates, sulfates, sulfides, and chlorides of the same elements. Combinations of metals and salts can also be used. The concentration of the metal salt can range from about 0.005 M to about 0.5 M, more preferably from about 0.025 M to 0.02 M.

Preferred metals include zirconium, cerium and nickel, and the preferred salts used are ZrCl₄, ZrO(NO₃)₃xH₂O, ZrOCl₂x8H₂O, Ce(NO₃)₃.6H₂O and NiCO₃, Ni(COOH)₂, Ni(NO₃)₂6H₂O, NiSO₄7H₂O.

In order to stabilize the gels and particles a doping or stabilizing agent is used. Preferred doping agents for zirconium oxide are Y₂O₃, CaO and MgO. Preferable yttrium is the doping agent, and a salt of yttrium, preferable Y(NO₃)₃ 6H₂O. Preferred doping agents for cerium oxide are Gd₂O₃, Sm₂O₃, Pr₂O₃ and Nd₂O₃.

Organic solvents that can be used include mono and disaccharides, such as fructose and glucose, and sucrose.

A first aspect of the present invention is thus related to a method of sol-gel processing for the preparation of doped gels, **characterized in that** an inorganic metal salt, a doping agent, pectin, and mono or disaccharides are used, and that said method comprises the steps:
a) preparing a first aqueous solution comprising said inorganic metal salt and said doping agent, and preparing a second aqueous solution comprising said mono or disaccharides and pectin,
b) mixing the first and second solutions to a third solution at a temperature from about 80 to 100°C,
c) incubating the combined solution from step b) at an elevated temperature of about 80 to 200 °C in order to gelatinize the third solution to a gel material.

A second aspect of the invention relates to a method of sol-gel processing for the preparation of doped nanoparticles, **characterized in that** an inorganic metal salt, a doping agent, pectin, and mono or disaccharides are used, and that said method comprises the steps:
a) preparing a first aqueous solution comprising said inorganic metal salt and said doping agent, and preparing a second aqueous solution comprising said mono or disaccharides and pectin,
b) mixing the first and second solutions to a third solution at a temperature from about 80 to 100°C,
c) incubating the combined solution from step b) at an elevated temperature of about 80 to 200 °C in order to gelatinize the third solution to a gel material
d) thermal treatment of the gelatinized material from step c) at a temperature of from 500 to 1200°C, preferable from 700 to 1000 °C.

Further aspects of the invention relates to gels prepared by the methods indicated above.

Preferred embodiments of the invention relates to sol-gel processing wherein the metal salt contains a metal selected from the group consisting of aluminum, hafnium, silicon, zirconium, cerium, lanthanum, germanium, tantalum, nickel, combinations thereof, and combinations thereof with titanium.

Currently preferred methods use metal salt containing zirconium, cerium or nickel.

Preferred embodiments of the invention relates to sol-gel processing of stabilized gels and nano-particles where yttrium is used as a stabilizing or doping agent.

Preferable, said mono or disaccharides contains a compound selected from the group comprising sucrose, maltose, lactose, fructose and glucose, and most preferable the compound is sucrose.

The invention is further illustrated by the following example, which is not to be construed in any way as imposing limitations upon the scope of the invention.

### EXPERIMENTAL SECTION

### Example 1

Preparation of yttrium stabilized zirconium based sols and nanoparticles by using sucrose and pectin as precursor.

Traditionally organic precursors used in the "chemical methods" referred to above are glycerol in the GN method, and ethylene glycol and citric acid in the Pechini method. The inventors of the present invention have surprisingly found that other precursor molecules can be used to obtain stabilized gels and nanoparticles.

With the methods according to the invention we are able to obtain ultra fine YSZ powders, replacing the organic compounds traditionally used with a mono or disaccharide.

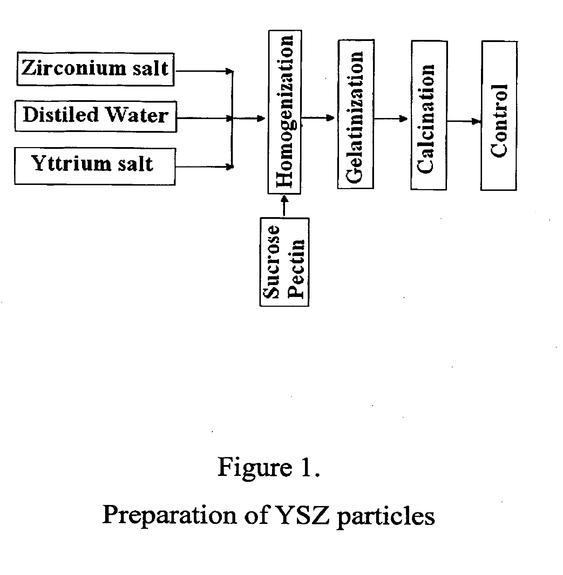

The salts ZrCl₄ (Sigma-Aldrich, technical purity) and Y(NO₃)₃ 6H₂O (Sigma-Aldrich, 99.9% purity) were used as zirconia and yttria precursors. Zirconium chlorate was dissolved in distilled water on a warming plate at 100°C. Next, the yttrium nitrate was added to the solution. After the homogenization, a sugar: pectin mixture with a mass ratio of 1:0.02 was added to the solution under continuous stirring. A general scheme showing the method is shown in figure 1.

The solution was slowly dried at the temperature of 100°C until it became completely gelatinized. The dried brown gel was subjected to a thermal treatment at 900°C in order to be transformed into stabilized zirconia nanoparticles.

The obtained powders were investigated in order to determine the mean size, the shape and the crystal structure of the particles. The analyses included TA -Thermal Analysis (Derivatograph Q 1500), BET analysis (Gemini 2380), TEM - Transmission Electron Microscopy (JEOL-JEM-100S Electron Microscope) and X-ray diffraction (Brucker D8-System) using Cu-K-alpha radiation.

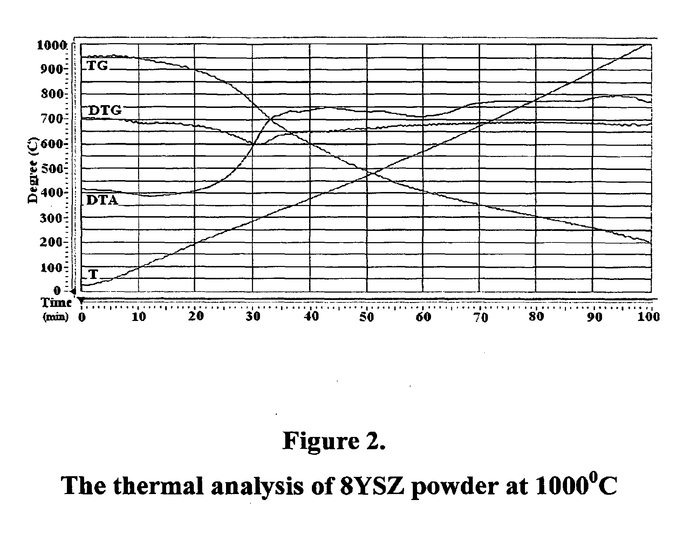

The thermal analyses were performed on dried YSZ gel using a Derivatograph Q 1500 (MOM Hungary) to determine the chemical and physical properties of the samples as a function of temperature or time based on the thermal effects that occur during heating or cooling (see figure 2). The maximum temperature was 1000°C and the heating rate was 10°C/min.

Analysing the TO and TDG curves of the ZrO₂ samples an endothermic process involving 5 % mass reduction occurs between 100 and 200°C which can be due to elimination of the water residue. Between 200 and 350°C an exothermic process involving 50 % mass reduction occurs due to the oxidation of the organic components. This exothermic process continues with reduced speed up to 600°C. The total mass reduction is 75% and it occurs up to 1000°C. Another exothermic process can be noticed on the DTA curve between 600 and 980°C. This latter exotherm effect is due to the formation and crystallization of ZrO₂ continued with a process that can be attributed to the formation of a solid solution between the ZrO₂ and Y₂O₃ oxides. As a result the cubic crystal form is stabilized. Due to the multitude of observed thermal effects it is possible that some of the processes interfere in the given temperature ranges. A closer study, involving comparisons of data from TDG and XRD, is needed in order to have a better understanding of the exact processes that take place at different temperature values.

The specific surface area of the samples was also determined by nitrogen adsorption according to the BET adsorption isotherm. The apparatus used was a Gemini 2380 from Micromeritics. A single point analysis gave 18.26 m²/g, and a multipoint analysis 18.75 m²/g. both with very good reproducibility. Using a density for cubic ZrO₂ of 5900 kg/m³ and assuming the particles to be round, this would correspond to particle diameters of 55.69 nm and 54.24 nm, respectively.

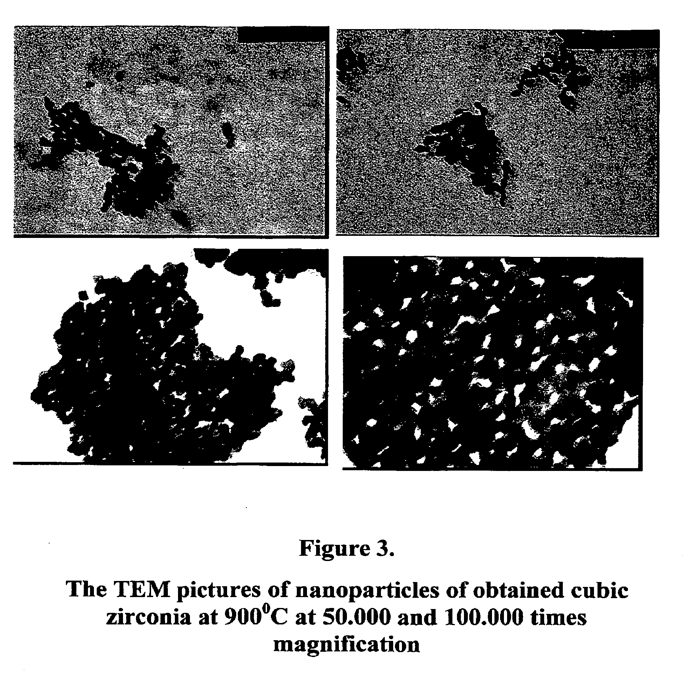

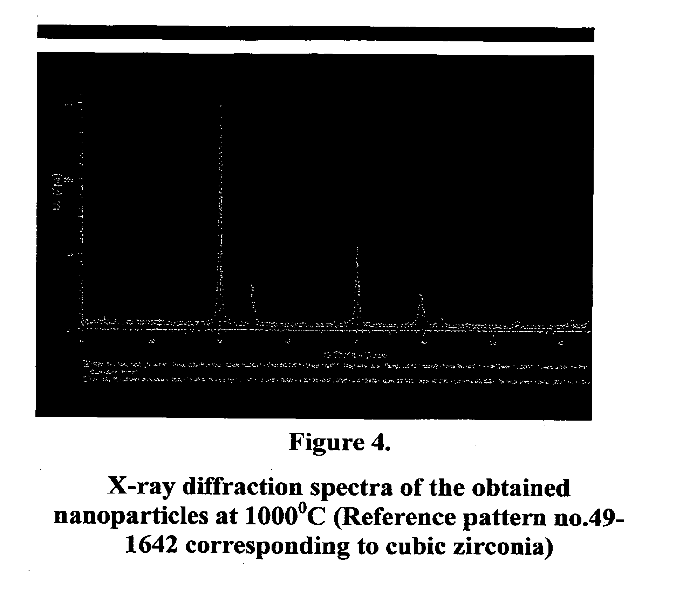

The morphology of the obtained powders was investigated using Transmission Electron Microscopy (TEM) performed by a JEOL - JEM - 1005 Electron Microscope. Distinct particles with fairly uniform dimensions ranging between 20 - 40 nanometres are observed at 50.000 and 100.000 times magnification for the powders sintered at 900°C (see figure 3) The X-ray diffraction spectra obtained by Brucker D-8 Advance X-ray diffractometer showed that the obtained nanoparticles at 900°C are stabilized in cubic crystal form (see figure 4) according to reference pattern no. 49-1642. The presence of other phases, such as single Y₂O₃ was not observed.

The crystallite size of the particles was determined using the Scherrer formula applied on the first three peaks of the obtained XRD spectrum. The λ value of the Cukalphal radiation used for determination is 0.15406 nm and the k value is equal with 1. The Full Width at Half Maximum (FWHM) values determined from the XRD spectrum are shown in table 1. According with all these, the crystallite size for the three peaks are 26.04, 20.28 and 22.4 nm, respectively. So, the crystallite mean size for the whole spectrum is 22.91 nm which is in at least rough agreement with the BET and TEM determinations.

**Table 1.**

| The crystallite size of the samples at 900°C | | | |
|---|---|---|---|
| | Peak 1 | Peak 2 | Peak 3 |
| Obs. max (degrees) | 30.115 | 34.842 | 50.156 |
| d (d (Obs. max) | 2.9651 | 2.5729 | 1.8173 |
| Full Width Half Max (degrees) | 0.351 | 0.456 | 0.435 |
| Crystallite Size (nm) | 26.04 | 20.28 | 22.40 |

### Conclusions

It is possible to produce nanoparticles of YSZ in relatively simple conditions and at low costs. The process lasts 30 hours at most and the total solution/complete solidification process takes less than 5 hours. Sucrose and pectin are cheap, non-toxic, available at industrial scale, easy to store and manipulate at low temperatures. The method is environmentally friendly since it is a water-based and uses two natural compounds as organic precursors. The common implementation existing in laboratories are sufficient, because the procedure does not require special or sophisticated equipment.

This reaction product may be used in synthesis processes because it requires lower temperatures and shorter periods of burning. One of the most interesting fields in which these nanoparticles can be used is Solid Oxide Fuel Cell components.

### References

[1] Fuel Cell Handbook. US Dept. of Energy, Office of Fossil Energy, 5 edition, 2000
[2] Handbook of Fuel Cells, Fundamentals, Technology and Applications, volume 4: Fuel Cell Technology and Applications. John Wiley & Sons, 2003.
[3] F. Tietz, H.-P. Buchkremer, and D. Stover. Components manufacturing for solid oxide fuel cells. Solid State Ionics, 152-153:373-381, 2002.
[4] N. H.Menzler, R. Hansch, R. Fleck, G. Blass, H. P. Buchkremer, H. Schichl, and D. Srover. Densification of SOFC yttria-stabilized zirconia electrolytes through addition of sintering additives. Electrochemical Society Proceedings, 2003-07:238-245, 2003.
[5] T.-L. Wen, D. Wang, M. Chen, H. Tu, Z. Lu, Z. Zhang, N. Nile, and W. Huang. Material research for planar SOFC stack. Solid State Ionics, 148:513-519, 2002.
[6] I. R. Gibson, G. P. Dransfield, and J. T. S. Irvine. Concentration upon electrical properties and susceptibility to ageing of yttria-stabilised zirconias. Journal of European Ceramic Society, 18:661-667, 1998.
[7] A. Weber and E. Ivers-Tiffee. Materials and concepts for Solid Oxide Fuel Cells (SOFCs) in stationary and mobile applications. Journal of Power Sources, 127:273-283, 2004.
[8] E. Wanzenberg, F. Tietz, D. Kek, P. Panjan, and D. Stover. Influence of electrode contacts on conductivity measurements of thin YSZ electrolyte films and the impact on solid oxide fuel cells. Solid State Ionics, 164:121-129, 2003.
[9] F. Chen and M. Liu. Preparation of yttria-stabilised zirconia (YSZ) films on La0.85Sr0.15MnO3 (LSM) and LSM-YSZ.
[10] T.E. Konstantinova, LA. Danilenko, N.P. Pilipenko, and G.K. Volkova. Nanomaterials for SOFC electrolytes and anodes on the base of zirconia. Electrochemical Society Proceedings, 2003-07:153-159,2003.
[11] C. A. J. Fisher and H. Matsubara. Oxide ion diffusion along grain boundaries in zirconia: A molecular dynamics study. Solid State Ionics, 113-115:311-318, 1998.
[12] D.Stover, H.P. Buchkremer, and S. Uhlenbruck. Processing and properties of the ceramic conductive mulilayer device solid oxide fuel cell (SOFC). Ceramics International, 30.
[13] V. Esposito, C. D'Ottavi, S. Ferrari, S. Licoccia, and E. Traversa. New chemical routes for preparation of ultrafine NiO-YSZ powders for SOFC anode applications. Electrochemical Society Proceedings, 2003-07:643-652, 2003.

## Claims

1. A method of sol-gel processing for the preparation of doped gels, **characterized in that** an inorganic metal salt, a doping agent, pectin and mono or disaccharides are used, and that said method comprises the steps:
a) preparing a first aqueous solution comprising said inorganic metal salt and said doping agent, and preparing a second aqueous solution comprising said mono or disaccharides and pectin,
b) mixing the first and second solutions to a third solution at a temperature from about 80 to 100°C,
c) incubating the combined solution from step b) at an elevated temperature of about 80 to 200 °C in order to gelatinize the third solution to a gel material.

2. A method according to claim 1, wherein the metal salt contains a metal selected from the group consisting of aluminium, hafnium, silicon, zirconium, cerium, lanthanum, germanium, tantalum, nickel, combinations thereof, and combinations thereof with titanium.

3. A method according to claim 2, wherein the zirconium salt is a salt selected from the group consisting of ZrCl₄, ZxO(NO₃)₃ and ZrOCl₂.

4. A method according to claim 1, wherein the concentration of inorganic salt in the third solution is in the range of 20 g/l to 60 g/l, preferably 26 g/l.

5. A method according to claim 1, wherein the doping agent is a salt selected from the group containing Y₂O₃, Sc₂O₃, CaO, MgO, Pr₂O₃, Nd₂O₃, Sm₂O₃ and Gd₂O₃.

6. A method according to claim 1, wherein the first solution is prepared by first dissolving the inorganic metal salt in water, and thereafter adding the doping agent to this solution.

7. A method according to claim 1, wherein the solution of mono or disaccharides contains a compound selected from the group comprising sucrose, maltose, lactose, fructose and glucose.

8. A gel produced according to the method of one of the claims 1-7.

9. A method of sol-gel processing, **characterized in that** an inorganic metal salt, a doping agent, pectin and mono or disaccharides are used, and that said method comprises the steps:
a) preparing a first aqueous solution comprising said inorganic metal salt and said doping agent, and preparing a second aqueous solution comprising said mono or disaccharides and pectin,
b) mixing the first and second solutions to a third solution at a temperature from about 80 to 100°C,
c) incubating the combined solution from step b) at an elevated temperature of about 80 to 200 °C in order to gelatinize the third solution to a gel material,
d) thermal treatment of the gelatinized material from step c) at a temperature of from 500 to 1200°C, preferable from 700 to 1000 °C.

10. A method in accordance with claim 9 for producing nanoparticles, wherein the nanoparticles are monodisperse.

11. A method of accordance with claim 10, wherein the nanoparticles are less than 100 nanometer in at least one dimension.

## Patentansprüche

1. Ein Verfahren zur Sol-Gel Verarbeitung für die Herstellung von dotierten Gelen, **dadurch gekennzeichnet, dass** ein anorganisches Metallsalz, ein Dosiermittel, Pektin und Mono- oder Disaccharide verwendet werden und dass das Verfahren die Schritte umfasst:
a) Herstellen einer ersten wässrigen Lösung, umfassend das anorganische Metallsalz und das Dotiermittel und Herstellen einer zweiten wässrigen Lösung, umfassend Mono- oder Disaccharide und Pektin,
b) Vermischen der ersten und zweiten Lösung zu einer dritten Lösung bei einer Temperatur von etwa 80 bis 100°C,
c) Inkubieren der kombinierten Lösung aus Schritt b) bei einer erhöhten Temperatur von etwa 80 bis 200° C, um die dritte Lösung zu einem Gelmaterial zu gelieren.

2. Ein Verfahren gemäß Anspruch 1, wobei das Metallsalz ein Metall enthält, ausgewählt aus der Gruppe bestehend aus Aluminium, Hafnium, Silizium, Zirkonium, Cer, Lanthan, Germanium, Tantal, Nickel, Kombinationen davon und Kombinationen davon mit Titan.

3. Ein Verfahren gemäß Anspruch 2, wobei das Zirkoniumsalz ein Salz ist, ausgewählt aus der Gruppe bestehend aus ZrCl₄, ZrO(NO₃)₃ und zrOCl₂.

4. Ein Verfahren gemäß Anspruch 1, wobei die Konzentration des anorganischen Salzes in der dritten Lösung im Bereich von 20g/l bis 60g/l, vorzugsweise 26g/l, liegt.

5. Ein Verfahren gemäß Anspruch 1, wobei das Dotiermittel ein Salz ist, ausgewählt aus einer Gruppe enthaltend Y₂O₃, Sc₂O₃, CaO, MgO, Pr₂O₃, Nd₂O₃, Sm₂O₃ und Gd₂O₃.

6. Ein Verfahren gemäß Anspruch 1, wobei die erste Lösung hergestellt wird, indem zuerst das anorganische Metallsalz in Wasser gelöst wird und danach das Dotiermittel zu dieser Lösung hinzugefügt wird.

7. Ein Verfahren gemäß Anspruch 1, wobei die Lösung von Mono- oder Disacchariden eine Verbindung enthält, ausgewählt aus einer Gruppe, umfassend Saccharose, Maltose, Lactose, Fructose und Glucose.

8. Ein Gel hergestellt gemäß dem Verfahren nach einem der Ansprüche 1 - 7.

9. Ein Verfahren zur Sol-Gel Verarbeitung, **dadurch gekennzeichnet, dass** ein anorganisches Metallsalz, ein Dotiermittel, Pektin und Mono- oder Disaccharide verwendet werden und dass das Verfahren die Schritte umfasst:
a) Herstellen einer ersten wässrigen Lösung, umfassend das anorganische Metallsalz und das Dotiermittel und Herstellen einer zweiten wässrigen Lösung, umfassend Mono- oder Disaccharide und Pektin,
b) Vermischen der ersten und zweiten Lösung zu einer dritten Lösung bei einer Temperatur von etwa 80 bis 100°C,
c) Inkubieren der kombinierten Lösung aus Schritt b) bei einer erhöhten Temperatur von etwa 80 bis 200° C, um die dritte Lösung zu einem Gelmaterial zu gelieren,
d) Wärmebehandlung des gelierten Materials aus Schritt c) bei einer Temperatur von 500 bis 1200°C, vorzugsweise von 700 bis 1000°C.

10. Ein Verfahren gemäß Anspruch 9 zur Herstellung von Nanopartikeln, wobei die Nanopartikel monodispers sind.

11. Ein Verfahren gemäß Anspruch 10, wobei die Nanopartikel in wenigstens einer Dimension kleiner als 100 nm sind.

## Revendications

1. Procédé de traitement SOL-GEL pour la préparation de gels dopés, **caractérisé en ce qu'**on utilise un sel métallique inorganique, un agent dopant, de la pectine et des mono ou disaccharides, et **en ce que** ledit procédé comprend les étapes de :
a) préparer une première solution aqueuse comprenant ledit sel métallique inorganique et ledit agent dopant, et préparer une deuxième solution aqueuse comprenant lesdits mono ou disaccharides et la pectine,
b) mélanger la première et la deuxième solutions à une troisième solution à une température comprise entre environ 80°C et 100°C,
c) incuber la solution combinée de l'étape b) à une température élevée d'environ 80°C à 200°C afin de faire gélifier la troisième solution en un matériau de type gel.

2. Procédé de traitement selon la revendication 1, **caractérisé en ce que** le sel métallique contient un métal choisi dans le groupe composé de l'aluminium, l'hafnium, le silicium, le zirconium, le cérium, le lanthane, le germanium, le tantale, le nickel, des combinaisons de ceux-ci et des combinaisons de ceux-ci avec le titane.

3. Procédé de traitement selon la revendication 2, **caractérisé en ce que** le sel de zirconium est un sel choisi dans le groupe composé de ZrCl₄, ZrO(NO₃)₃ et de ZrOCl₂.

4. Procédé de traitement selon la revendication 1, **caractérisé en ce que** la concentration en sel inorganique de la troisième solution est comprise entre 20 g/l et 60 g/l, de préférence 26 g/l.

5. Procédé de traitement selon la revendication 1, **caractérisé en ce que** l'agent de dopage est un sel choisi dans le groupe comprenant Y₂O₃, Sc₂O₃, CaO, MgO, Pr₂O₃, Nd₂O₃, Sm₂O₃ et Gd₂O₃.

6. Procédé de traitement selon la revendication 1, **caractérisé en ce que** la première solution est préparée en dissolvant d'abord le sel métallique inorganique dans l'eau, et ensuite en ajoutant l'agent de dopage à cette solution.

7. Procédé de traitement selon la revendication 1, **caractérisé en ce que** la solution de mono ou disaccharides contient un composé choisi dans le groupe comprenant le sucrose, le maltose, le lactose, le fructose et le glucose.

8. Gel obtenu suivant le procédé selon l'une des revendications 1 à 7.

9. Procédé de traitement SOL-GEL, **caractérisé en ce qu'**on utilise un sel métallique inorganique, un agent de dopage, de la pectine et des mono ou disaccharides, et **en ce que** ledit procédé comprend les étapes de :
a) préparer une première solution aqueuse comprenant ledit sel métallique inorganique et ledit agent de dopage, et préparer une deuxième solution aqueuse comprenant lesdits mono ou disaccharides et la pectine,
b) mélanger la première et la deuxième solution à une troisième solution à une température comprise entre environ 80°C et 100°C,
c) incuber la solution combinée de l'étape b) à une température élevée comprise entre environ 80 °C et 200 °C afin de faire gélifier la troisième solution en un matériau de type gel,
d) traiter thermiquement le matériau de type gel de l'étape c) à une température comprise entre environ 500 °C et 1200 °C, de préférence entre 700°C et 1000 °C.

10. Procédé selon la revendication 9 pour produire des nanoparticules, **caractérisé en ce que** les nanoparticules sont monodispersées.

11. Procédé selon la revendication 10, **caractérisé en ce que** les nanoparticules sont de dimension inférieure à 100 nanomètres dans au moins une dimension.
